# EUROPEAN PATENT APPLICATION

(11) **EP 1 782 718 A1**
(43) Date of publication of application: **09.05.2007**
(21) Application number: 06121693.3
(22) Date of filing: 03.10.2006
(51) Int. Cl.: A47J 37/10, A47J 36/04

(54) **Cooking apparatus**

(30) Priority: 21.10.2005 IT MO20050274
(71) Applicant: Malagoli Aldebrando S.R.L., 41100 Modena (IT)
(72) Inventor: Malagoli, Enrico, 41100 Modena (IT); Malagoli, Gabriele, 41100 Modena (IT)
(74) Representative: Luppi, Luigi

(57) **Abstract**

A cooking apparatus comprises cooking chamber means (2, 14) arranged for receiving a food product, heat control means (10, 12) arranged for heating said food product, said heat control means (10, 12) comprising refractory plate means (12) arranged for heating said food product.

## Description

The invention relates to a cooking apparatus for cooking and/or defrosting food products.

In particular, the invention relates to a cooking apparatus for cooking and/or defrosting food products that require a great quantity of heat for a short period of time, such as, for example, bakery products such as pizza, focaccias, bread.

Cooking apparatuses are known comprising a pan body provided in a bottom portion thereof with a pair of semicircular elements.

The semicircular elements are provided with respective ends that are raised with respect to the aforesaid bottom portion and projecting inside with respect to the pan body so as to define openings for the passage of heat.

Such apparatuses further comprise a lid arranged for being positioned during cooking above the aforesaid pan body.

The lid is made of glass and is provided above with a heat-resistant plastic knob.

The known apparatuses comprise heat control means supported by the pan body.

The heat control means is provided with a stainless metal plate on which the food product to be cooked and/or defrosted is positioned.

The heat control means further comprises a first flat metal object and a second flat metal object mounted below and in a coaxial manner with respect to the metal plate by means of a threaded connection.

The first flat metal object and the second flat metal object, which are positioned between a heat source and the metal plate, absorb the heat coming from a heat source and transfer the heat to the metal plate.

Known apparatuses can use gas hobs, coal, and firewood as heat source.

Once the known apparatuses are positioned above a selected heat source, a heat flow generated by the latter passes through the openings, licking and heating in sequence the second flat metal object, the first flat metal object and the metal plate before circulating in a cooking chamber defined as a space between the stainless metal plate and the lid.

A drawback of known apparatuses is that they do not allow the bakery products to be cooked suitably.

In particular, known apparatus do not enable bakery products like pizza to be cooked evenly.

This is due to the fact that the heat coming from the heat source passes rapidly from the second flat metal object to the first flat metal object to the metal plate, overheating the latter.

The metal plate, having high heat conductivity, rapidly transfers the heat to the bakery product, which in the most serious cases may get burnt.

Further, known apparatuses do not enable the steam produced during cooking and present in the cooking chamber to be eliminated, as they do not allow the surface of the bakery products to be adequately cooked.

As a result, the bakery products, and in particular pizza, cooked in the known apparatuses, are not correctly heated and in the most serious cases are uneatable.

A still further drawback of the known apparatuses relates to the high costs to be sustained for the purchase of stainless-steel components that are necessary for making the heat control means, and the constructional difficulties connected to the use of materials that are easily deformable with heat.

An object of the invention is to improve cooking apparatuses for cooking and/or defrosting food products, in particular bakery products.

A further object is to provide cooking apparatuses that achieve even cooking of the food products.

A still further object is to make cooking apparatuses that are easy to manufacture and of modest cost.

According to the invention, there is provided a cooking apparatus comprising cooking chamber means arranged for receiving a food product, heat control means arranged for heating said food product, characterised in that said heat control means comprises refractory plate means.

Owing to this aspect of the invention, it is possible to obtain uniform cooking of the food product.

In fact, the refractory plate means has less heat conductivity than metal and transfers the heat to the food product more evenly and slowly than the metal plate of known apparatuses.

This enables the food products, in particular pizza, to be cooked evenly without incurring undesired burning.

In an embodiment of the invention, said apparatus comprises lid means positioned above said food product, provided with holes.

Owing to the holes, obtained in an upper portion of said lid means, it is possible to evacuate the steam produced during heating, thereby improving the cooking of the bakery products.

The invention can be better understood and carried into effect with reference to the attached drawings, in which an embodiment of the invention is shown by way of non-limiting example, in which:
Figure 1 is a plan view of a cooking apparatus;
Figure 2 is a section view taken along the plane II-II of the apparatus in Figure 1;
Figure 3 is a plan view of a pan body of the apparatus in Figure 1;
Figure 4 is a section taken along the plane IV-IV of the pan body in Figure 3;
Figure 5 is a perspective view of a support associated with the apparatus in Figure 1;
Figure 6 is a plan view of a cast iron plate;
Figure 7 is a side view of the cast iron plate in Figure 5;
Figure 8 is a plan view of a lid of the apparatus in Figure 1;
Figure 9 is a section taken along the plane IX-IX of the lid in Figure 8.

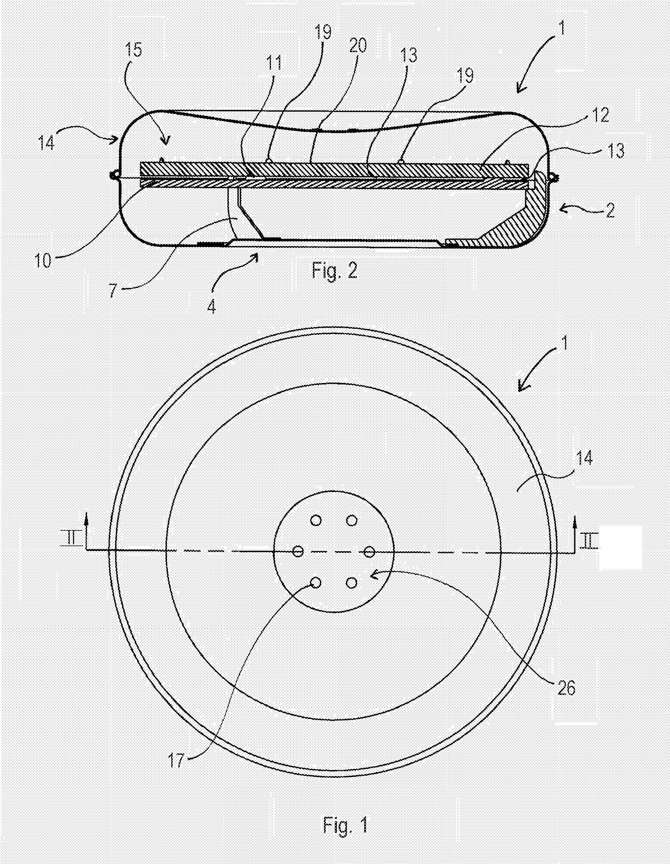

With reference to Figures 1 and 2, there is shown a cooking apparatus 1, arranged for cooking and/or defrosting food products, in particular bakery products.

The apparatus 1 is particularly suitable for cooking foods that require a great heat supply for a limited period of time, such as for example pizza, focaccias, bread.

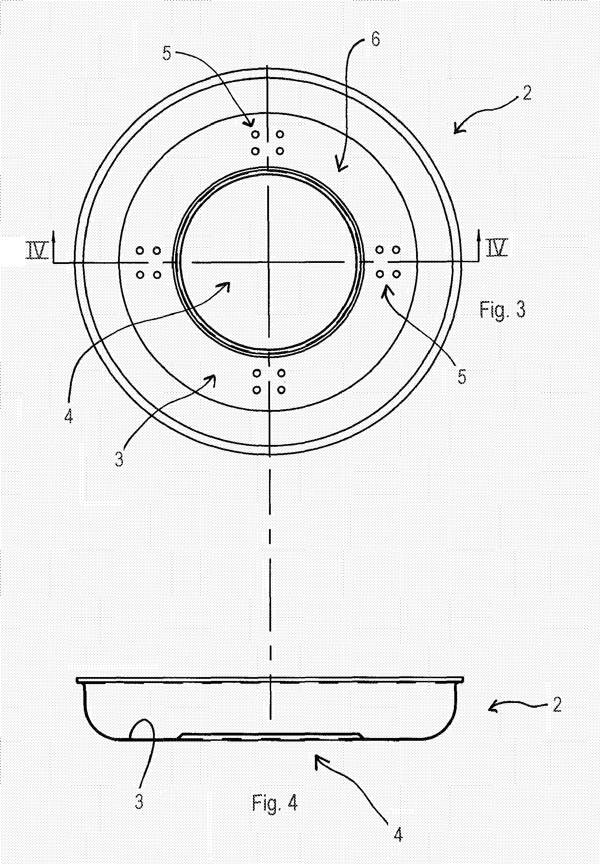

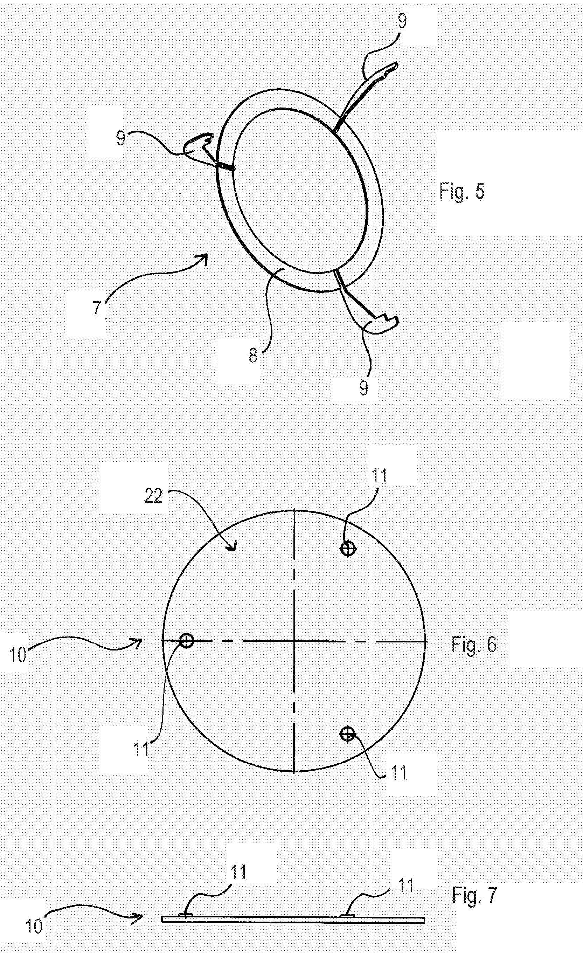

The apparatus 1 comprises a pan body 2, shown in detail in Figures 3 and 4, having a substantially circular shape.

The pan body 2 is provided with a bottom surface 3, in which an opening 4 is obtained substantially centrally.

The substantially circular opening 4 is shaped in such a way as to be able to be positioned in use substantially at a hob, for example a gas hob.

In an alternative embodiment, that is not shown, the apparatus 1, suitably modified, can use as sources of heat coal, fire produced by firewood or an electric hob.

The pan body 2 comprises in an annular region 6 of the bottom surface 3 a plurality of centring holes 5, for example arranged in groups of four, each group being spaced from a further group by a circumference arc substantially equal to 90°.

The centring holes 5 are arranged for engaging with respective fixing elements, that are not shown, projecting from a support 7, shown in Figure 5.

The support 7 comprises a base element 8, having a substantially annular shape, on which there are fixed, for example by welding, supporting elements 9.

The supporting elements 9, for example three in number, spaced apart from one another by a further circumference arc substantially equal to 120°, are arranged for supporting a cast iron plate 10, shown in detail in Figures 6 and 7.

The cast iron plate 10 has a substantially circular shape and is provided with a plurality of projections 11.

The projections 11, for example 3 in number, are positioned in a peripheral region 22 of the cast iron plate 10 substantially arranged so as to define vertices of an equilateral triangle.

The apparatus 1 further comprises a plate of refractory material 12 (Figure 1), for example a refractory stone.

The plate of refractory material 12 is positioned, in use, above the projections 11, so as to substantially face the cast iron plate 10.

In this way, owing to the projections 11, which act as spacing elements, between the plate of refractory material 12 and the cast iron plate 10 a gap 13 is defined.

The plate of refractory material 12 comprises an upper surface 20 from which a plurality of projecting elements 19 project, on which the food product is positioned.

In an embodiment of the invention, which is not shown, the surface 20 is substantially smooth.

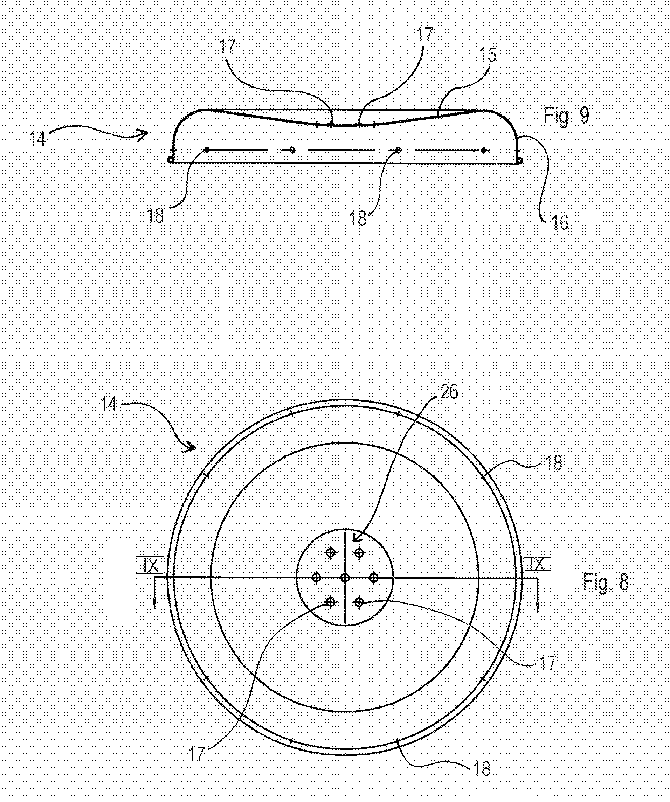

The apparatus 1 further comprises a lid 14, shown in detail in Figures 8 and 9, arranged for being positioned, in use, above the pan body 2.

In this way, in use, the pan body 2 and the lid 14 make a cooking chamber 15, inside which the food product is cooked. The lid 14 is bound by a surface 15 and by a side surface 16.

The surface 15, which is concave, has a plurality of holes 17 substantially at a central portion 26 thereof.

Similarly, the side surface 16 has a plurality of further holes 18 that are equidistant to one another.

The lid 14 is further provided with a metal bracket, which is not shown, on which is mounted a wooden handle arranged for being gripped by a user to move the aforesaid lid 14.

When it is desired to cook and/or defrost a food product, in particular pizza, the latter is placed on the plate of refractory material 12, the lid 14 is positioned and the opening 4 is substantially placed at a heat source, for example a gas hob.

A heat flow generated by the heat source licks the cast iron plate 10, heating the latter.

The cast iron plate 10 acts as a heat accumulator and simultaneously as a protection for the plate of refractory material 12 that in this way is not hit directly by the heat flow, which could damage the plate of refractory material 12.

The heat flow is then transferred by the cast iron plate 10 to the plate of refractory material 12 that acts as a heating element for the food product.

It should be noted that the cast iron plate 10 transfers the heat evenly to the plate of refractory material 12 owing to an air cushion located in the gap 13.

In this way, the plate of refractory material 12, heated in a uniform manner, transfers the heat evenly to the food product, preventing undesired burns.

It should be noted that the cooking performed by the apparatus 1 is further improved with respect to prior-art apparatuses, owing to the particular shape of the lid 14, of the holes 17 and of the further holes 18.

In fact the concavity of the lid 14 increases the contact between a flow of ascending heat and the food product, increasing the heat exchange, with consequent improvement of the surface cooking of the food product.

Further, the holes 17 and the further holes 18 enable the heat flow and the steam produced in cooking to be evacuated effectively.

In particular, the holes 17, owing to the position thereof, promote the so-called "stack effect", i.e. a rapid escape of the hot and humid air in the cooking chamber 15 to the external environment.

This is particularly important for cooking foods that require effective elimination of the steam, such as, for example, pizza.

## Claims

1. Cooking apparatus comprising cooking chamber means (2, 14) arranged for receiving a food product, heat control means (10, 12) arranged for heating said food product, **characterised in that** said heat control means (10, 12) comprises refractory plate means (12) arranged for heating said food product.

2. Apparatus according to claim 1, wherein said heat control means (10, 12) comprises cast iron plate means (10), operationally positioned below said refractory plate means (12) and arranged for transferring a quantity of heat received from a heat source to said refractory plate means (12).

3. Apparatus according to claim 2, wherein between said refractory plate means (12) and said cast iron plate means (10) there is defined gap means (13) arranged for promoting a substantially uniform transfer of heat from said cast iron plate means (10) to said refractory plate means (12).

4. Apparatus according to claim 2, or 3, wherein from said cast iron plate means (10) there projects spacer means (11) arranged for spacing said cast iron plate means (10) from said refractory plate means (12).

5. Apparatus according to any preceding claim, wherein said cooking chamber means (2, 14) comprises pan body means (2) and lid means (14), said lid means (14) being associable with said pan body means (2).

6. Apparatus according to claim 5, wherein said pan body means (2) is provided with a bottom surface (3) wherein there is obtained substantially centrally an opening (4) arranged for being positioned substantially at said heat source.

7. Apparatus according to claim 6, wherein said opening (4) is substantially circular.

8. Apparatus according to any one of claims 5 to 7, and further comprising supporting means (7) associated with said pan body means (2) and supporting said cast iron plate means (10).

9. Apparatus according to any one of claims 5 to 8, wherein said lid means (14) comprises a substantially concave surface (15).

10. Apparatus according to claim 9, wherein said surface (15) comprises a central portion (26) wherein holes (17) are obtained that are arranged for evacuating a heat and steam flow from said cooking chamber means (2, 14).

11. Apparatus according to any one of claims 5 to 10, wherein said lid means (14) comprises a side surface (16).

12. Apparatus according to claim 11, wherein said side surface (16) is provided with further holes (18) cooperating with said holes (17) to evacuate said heat and steam flow.

13. Apparatus according to any one of claims 2 to 12, wherein said heat source comprises gas hob means.
